# EUROPÄISCHE PATENTANMELDUNG

(11) **EP 4 830 663 A1**
(43) Veröffentlichungstag der Anmeldung: **28.10.2026**
(21) Anmeldenummer: 26174756.2
(22) Anmeldetag: 27.04.2026
(51) Int. Cl.: A61C 9/00, B33Y 80/00, B33Y 50/00

(54) **ABFORMLÖFFEL MIT GITTERSTRUKTUR**

(30) Priorität: 25.04.2025 DE 102025116053
(71) Anmelder: Universitätsklinikum Würzburg - Anstalt des öffentlichen Rechts -, 97080 Würzburg (DE)
(72) Erfinder: HÖHNE, Christian, 97070 Würzburg (DE)
(74) Vertreter: Eisenführ Speiser

(57) **Zusammenfassung**

Die Erfindung betrifft einen Abformlöffel zur Anfertigung von Gebissabdrücken mithilfe von Abformmaterial, ein Verfahren zur Herstellung sowie ein nichtflüchtiges Speichermedium , wobei der Abformlöffel umfasst: einen Löffelabschnitt, ausgestaltet zur Aufnahme des Abformmaterials, und einen Halteabschnitt, umfassend einen Haltegriff, wobei der Löffelabschnitt ferner zur Aufnahme eines Gebisses eines Ober- oder Unterkiefers ausgestaltet ist, dadurch gekennzeichnet, dass eine Oberfläche des Abformlöffels zumindest in Teilen des Löffelabschnitts eine Gitterstruktur aufweist, die zur Aufnahme des Abformmaterials ausgestaltet ist.

## Beschreibung

Die Erfindung betrifft einen Abformlöffel zur Anfertigung von Gebissabdrücken mithilfe von Abformmaterial, ein Verfahren zur Herstellung eines Abformlöffels zur Anfertigung von Gebissabdrücken mithilfe von Abformmaterial sowie einen nichtflüchtiges Speichermedium.

Ein Abformlöffel ist ein zahnärztliches Hilfsinstrument, mit dem die Abformung des Ober- oder Unterkiefers vorgenommen wird. Auf dem Markt gibt es diverse konfektionierte Abformlöffeln unterschiedlicher Modelle und Materialien, die sich jedoch in der Form und Ausführung sehr ähnlich sind. Sie sind entweder aus Metallen oder Polymeren gefertigt, wobei Löffel aus Polymeren in der Literatur wegen mangelnder Präzision eher für einfache Abdrücke verwendet werden, bei denen die Präzision nicht von Bedeutung ist. Neben diesen Löffeln gibt es auch für Patienten individuell hergestellte Löffel aus Polymeren, die im zahntechnischen Labor hergestellt werden.

All diese bekannten konfektionierten Abformlöffel müssen nach der Anwendung am Patienten aufwendig gereinigt werden, um die hohen Hygienestandards der Zahnmedizin zu erfüllen. Überdies sorgt Abformmasse, die bei der Erstellung eines Abdruckes per Abformlöffel aus dem Löffel heraustritt, beim Patienten für Unwohlsein und löst beispielsweise den Würgereflex aus. Des Weiteren existieren diese konfektionierten Abformlöffel, mit Ausnahme des individuell hergestellten Löffels, nur in gewissen standardisierten Größen. Für die meisten Patienten wird daher ein leicht zu großer Abformlöffel verwendet, da keine dieser standardisierten Größen perfekt zu dem Patientengebiss passt.

Der vorliegenden Erfindung lag die Aufgabe zugrunde, einen oder mehrere dieser Nachteile zu beheben. Insbesondere sollte dabei ein optimierter Abformlöffel bereitgestellt werden, der ein oder mehrere dieser Probleme löst.

Gemäß einem ersten Aspekt der Erfindung wird diese Aufgabe durch ein Abformlöffel zur Anfertigung von Gebissabdrücken mithilfe von Abformmaterial gelöst, umfassend: einen Löffelabschnitt, ausgestaltet zur Aufnahme des Abformmaterials, und einen Halteabschnitt, umfassend einen Haltegriff, wobei der Löffelabschnitt ferner zur Aufnahme eines Gebisses eines Ober- oder Unterkiefers ausgestaltet ist, dadurch gekennzeichnet, dass eine Oberfläche des Abformlöffels zumindest in Teilen des Löffelabschnitts eine Gitterstruktur aufweist, die zur Aufnahme des Abformmaterials ausgestaltet ist.

Der Löffelabschnitt ist dabei insbesondere derart ausgestaltet, dass er die Zähne eines Gebisses, bevorzugt eines Ober- oder Unterkiefers, bei der Anwendung am Patienten umschließt und das Abformmaterial in Kontakt mit möglichst jeder freiliegenden Oberfläche der Zähne bringt. Das Abformmaterial wird üblicherweise vor der Anwendung am Patienten in den Löffelabschnitt gestrichen. Der Halteabschnitt dient dabei zur erleichterten Bedienung des Abformlöffels. Der Haltegriff bietet eine praktische Haltemöglichkeit bei der Bedienung des Abformlöffels, beispielsweise beim Bestreichen des Abformlöffels mit Abformmaterial oder beim Ein- bzw. Ausführen des Löffelabschnitts in den Mund eines Patienten. Ebenso ist der Haltegriff insbesondere derart ausgestaltet, dass er eine gute Kraftübertragung auf den Löffelabschnitt ermöglicht, beispielsweise derart, dass über den Haltegriff der Löffelabschnitt an die Zähne eines Patienten gepresst werden kann.

Unter Gitterstruktur ist eine gleichmäßige oder ungleichmäßige Anordnung länglicher Elemente zu verstehen, die zwischen den länglichen Elementen Zwischenräume (auch Maschen genannt) aufweist. Insbesondere durch Formgussverfahren oder additive Fertigung hergestellte Gitterstrukturen bestehen dabei aus einem zusammenhängendem Guss, sind in ihrer Architektur jedoch klar als Gitter erkennbar. Die länglichen Elemente müssen also nicht zunächst als einzelne Bauteile vorliegen, um dann zu einer Gitterstruktur zusammengesetzt zu werden, sondern können auch während des Herstellungsprozesses der Gitterstruktur ausgebildet werden. Eine Gitterstruktur dient üblicherweise zur Durchlässigkeit von beispielsweise Luft, Licht oder Wasser und weist, je nach Material und Form der Gitterstruktur, starke mechanische Belastungseigenschaften auf. Im Gegensatz zu einer Gitterstruktur handelt es sich beispielsweise bei einer Lochplatte um ein einstückiges Bauteil, in dessen Materialfläche Durchbrechungen, typischerweise durch Stanzen, Bohren, Lasern, Ätzen oder andere materialabtragende Verfahren, eingebracht werden. Eine Lochplatte besteht aus einer perforierten Materialfläche und stellt somit keine Gitterstruktur dar.

In einer bevorzugten Variante umfasst die Gitterstruktur mehrere hexagonale Gitterelemente, wobei sich hexagonal auf die Form des Zwischenraums bezieht, der von einem Gitterelement eingeschlossen wird. Dies wirkt sich positiv auf die Stabilität und Durchlässigkeit bzw. Aufnahme von Abformmaterial der Gitterstruktur bzw. des Abformlöffels aus und ermöglicht überdies die Ausgestaltung der Gitterstruktur in komplexen dreidimensionalen Formen unter Wahrung der mechanischen Stabilität der Gitterstruktur.

Die Gitterstruktur in Teilen des Löffelabschnitts ist insbesondere derart ausgestaltet, dass Abformmaterial bei dem Auftragen des Abformmaterials auf den Löffelabschnitt bzw. der Anfertigung des Abdrucks in die Zwischenräume der Gitterstruktur eindringt. Dies verhindert, dass überschüssiges Abformmaterial aus dem Löffel in den Mundraum des Patienten gedrückt wird, insbesondere aus dem Löffel in Richtung Gaumen des Patienten und so einen Würgereiz auslöst. Durch die abwechselnde Anordnung von Löffelmaterial und Zwischenräumen in der Gitterstruktur erfährt das Abformmaterial nach Anordnung in dem Löffelabschnitt bei äußerer Krafteinwirkung einen erhöhten Widerstand im Vergleich zu beispielsweise einer glatten Fläche, auf der das Abformmaterial angeordnet ist, und rutscht nicht aus dem Löffelabschnitt hinaus. Durch die Gitterstruktur ist es nicht notwendig, im Gegensatz zu allen anderen Löffeln, ein Adhäsiv (Kleber) auf den Löffel aufzutragen, damit sich das Material verbindet. Dadurch werden Zeit und Ressourcen für das Adhäsiv gespart. Des Weiteren ist diese optimierte Verbindung des Abformmaterial mit dem Löffel auch vorteilhaft für die Genauigkeit des Abdrucks, da sich das Material gleichmäßig in der Gitterstruktur verzahnt und somit eine nachteilhafte Ablösung des Materials von dem Teil des Löffelabschnitts mit der Gitterstruktur und insbesondere Rändern dieses Teils des Löffelabschnitts verhindert wird.

Ein weiterer Vorteil der Gitterstruktur in Teilen des Löffelabschnitts gegenüber herkömmlichen Abformlöffeln ist, dass für die Herstellung weniger Material verbraucht wird. Ist beispielsweise der komplette Löffelabschnitt als Gitterstruktur ausgestaltet sind Materialeinsparungen von über 60 % möglich.

Ein Teil des Löffelabschnitts ist dabei insbesondere als voluminöser Anteil des Löffelabschnitts oder Anteil der Oberfläche des Löffelabschnitts zu verstehen. Je größer der Teil des Löffelabschnitts, der die Gitterstruktur aufweist, desto stärker treten die positiven Effekte der Erfindung auf. Bevorzugt ist ein möglichst großer Teil des Löffelabschnitts als Gitterstruktur ausgebildet. Es ist ebenso möglich, dass auch ein Teil des Halteabschnitts als Gitterstruktur ausgestaltet ist.

Gemäß einer vorteilhaften Ausgestaltung eines Aspekts der Erfindung ist die Gitterstruktur Ergebnis einer additiven Herstellung.

Eine additive Herstellung beschreibt dabei ein Herstellungsverfahren, in dem kein Material von dem Teil des Abformlöffels oder einem Rohling abgetragen, sondern ausschließlich Material zusammengeführt wird. Beispielsweise wird Material Schicht für Schicht aufgetragen, um einen dreidimensionalen Gegenstand zu fertigen. Ein bekanntes Beispiel für eine additive Herstellung ist der 3D-Druck, zum Beispiel das Fused Deposition Modeling, die Stereolithographie, SLA, darauf aufbauende Verfahren wie Digital Light Processing, DLP, und maskierter Stereolithographie, MSLA, oder Pulverdruck per selektivem Laserschmelzen, SLM, oder selektivem Lasersintern, SLS.

Ein solches Herstellungsverfahren wirkt sich besonders vorteilhaft auf die Stabilität der Gitterstruktur aus.

Des Weiteren wird bei einer solchen additiven Herstellung insbesondere das gesamte Material in den Löffel umgewandelt. Überdies ist bevorzugt nach dieser Herstellung keine Nachbearbeitung des Löffels nötig.

Gemäß einer weiteren vorteilhaften Ausgestaltung eines Aspekts der Erfindung umfasst der Abformlöffel einen insbesondere durchlaufenden Rand an Kanten des Abformlöffels, wobei der Rand keine Gitterstruktur aufweist.

Als Kanten des Abformlöffels werden bevorzugt die folgenden Bereiche des Abformlöffels verstanden: zum einen ein Ende des Abformlöffels in Richtung Gaumen des Patienten bei sinngemäßer Anwendung des Abformlöffels im Mundraum eines Patienten und zum anderen ein Ende des Abformlöffels in Richtung Zahnfleisch der Zähne des Patienten, von denen ein Abdruck angefertigt wird. Ebenso können Kanten des Halteabschnitts als solcher Rand ausgestaltet sein.

Dieser insbesondere durchlaufende Rand an Kanten des Abformlöffels ist insbesondere rund und glatt ausgestaltet, wodurch spitze Kanten des Abformlöffels verhindert und somit die Sicherheit und der Komfort im Umgang mit dem Abformlöffel erhöht werden.

Zusätzlich hat der insbesondere durchlaufende Rand positive Auswirkungen auf die Stabilität des Abformlöffels.

Gemäß einer weiteren vorteilhaften Ausgestaltung eines Aspekts der Erfindung weist die gesamte Oberfläche des Abformlöffels im Löffelabschnitt die Gitterstruktur auf und ist der Abformlöffel im Löffelabschnitt hohl ausgestaltet, derart, dass Abformmaterial, das durch die Gitterstruktur dringt, in den Abformlöffel aufgenommen wird.

In dieser Ausgestaltung treten die Vorteile der Erfindung besonders hervor. Zunächst kann ein besonders großes Volumen an Abformmaterial durch die hohle Ausgestaltung des Löffelabschnitts in den Abformlöffel aufgenommen werden, was die Wahrscheinlichkeit des Austretens von Abformmaterial aus dem Abformlöffel in den Mundraum des Patienten weiter reduziert.

Des Weiteren besteht in dieser Ausgestaltung die Möglichkeit, dass die den Abdruck durchführende Person, beispielsweise Arzt/Ärztin oder medizinisches Fachpersonal, durch die Zwischenräume der Gitterstruktur die Position der Zähne des Patienten im Abformlöffel kontrollieren kann. Dies ermöglicht auch die Auswahl eines für den jeweiligen Patienten besonders gut passenden Abformlöffels vor der Durchführung des Abdrucks, da der Blick durch die Zwischenräume der Gitterstruktur eine besonders präzise Einschätzung hinsichtlich der Passform des Abformlöffels zu dem Gebiss zulässt.

Gemäß einer weiteren vorteilhaften Ausgestaltung eines Aspekts der Erfindung erfüllt der Abformlöffel die Anforderungen der Zulassung medizintechnischer Produkte, insbesondere im Bereich der Zahnmedizin, in Deutschland.

Diese Anforderungen umfassen beispielsweise Sicherheits- und Leistungsanforderungen sowie ein Nutzen-Risiko-Verhältnis.

Somit entspricht der Abformlöffel insbesondere nationalen und internationalen Gesetzen, Verordnungen und Richtlinien, beispielsweise EU-Verordnungen, betreffend medizintechnische, insbesondere zahnmedizintechnische Produkte.

Gemäß einer weiteren vorteilhaften Ausgestaltung eines Aspekts der Erfindung umfasst die Gitterstruktur mindestens zwei unterschiedliche Gitterelemente, insbesondere Hexagon und Pentagon.

Die Form eines Gitterelements beschreibt dabei insbesondere die Form eines Zwischenraums, der von Material der Gitterstruktur umschlossen wird. Die Gitterstruktur umfasst in dieser Ausgestaltung mindestens zwei Gitterelemente mit unterschiedlicher Form, wobei insbesondere eine Form eines ersten Gitterelements dieser zwei Gitterelemente ein Hexagon ist und eine Form eines zweiten Gitterelements dieser zwei Gitterelemente ein Pentagon ist.

Eine Kombination von Gitterelementen unterschiedlicher Form, insbesondere aus Hexagon und Pentagon förmigen Gitterelementen, erlaubt die Ausbildung komplexer dreidimensionaler Ausgestaltungen der Gitterstruktur unter gleichzeitiger Wahrung der mechanischen Stabilität der Gitterstruktur.

Die Ausbildung der Gitterstruktur als komplexe dreidimensionale Form ermöglicht eine verbesserte Anpassung des Löffelabschnitts an ein Gebiss, sodass Zwischenräume zwischen Löffel und Gebiss verringert werden. Somit wird zur Erstellung eines Abdrucks weniger Abdruckmaterial benötigt, da weniger Zwischenräume zwischen Löffel und Gebiss von dem Abdruckmaterial ausgefüllt werden müssen. Verglichen mit herkömmlichen konfektionierten Abdrucklöffeln, insbesondere Metalllöffeln, ermöglicht dies eine Ersparnis an Abformmaterial von bis zu über 40 % pro Abdruck.

Gemäß einer weiteren vorteilhaften Ausgestaltung eines Aspekts der Erfindung besteht die Gitterstruktur, insbesondere der Löffelabschnitt, bevorzugt der Abformlöffel, aus einem 3D-druckbaren Material.

Besonders bevorzugt handelt es sich bei diesem 3D-druckbaren Material um ein biokompatibles Material. Ein Beispiel für ein solches 3D-druckbares Material ist das biokompatible Photopolymer Custom Tray Resin 1 L (RS-F2-CTBL-01) der Firma Formlabs.

Solche 3D-druckbaren Materialien zeichnen sich insbesondere durch geringes Gewicht pro Volumen, jedoch hohe Stabilität und Bruchfestigkeit aus.

Die höhere Stabilität gegenüber Polymeren, die für bekannte Abformlöffel verwendet werden, erhöht die Genauigkeit des Gebissabdrucks eines Löffels dieser Ausgestaltung. Mit

Abformlöffeln dieser Ausgestaltung konnten insbesondere Steigerungen in der Genauigkeit von über 350 % verglichen mit herkömmlichen Polymer-Abformlöffeln erzielt werden. Ebenso wir mit einem Abformlöffel dieser Ausgestaltung die Genauigkeit eines Abdrucks per herkömmlichem Metalllöffel erreicht.

Auch ermöglicht die große Verfügbarkeit von 3D-druckbarem Material, insbesondere biokompatiblem 3D-druckbarem Material, die Ausgestaltung des Abformlöffels als Einmalprodukt. Dies erhöht zum einen die Hygiene gegenüber herkömmlichen Abformlöffeln, die üblicherweise wiederverwendet werden und macht zum anderen einen aufwendigen Reinigungsprozess des Abformlöffels nach Anwendung obsolet. Hierbei ist auch zu erwähnen, dass dies die Verwendung von nachwachsenden und biologisch abbaubaren Rohstoffen zur Herstellung der Gitterstruktur, bzw. des Abformlöffels, ermöglicht.

Ebenso wird durch das leicht verfügbare Material sowie den relativ unaufwendigen Herstellungsprozess die Anfertigung individuell an einen Patienten angepasster Abformlöffel möglich.

Gemäß einer weiteren vorteilhaften Ausgestaltung eines Aspekts der Erfindung ist der Abformlöffel konfektioniert und insbesondere individuell herstellbar.

Der Abformlöffel ist des Weiteren insbesondere einteilig herstellbar ausgestaltet. Bei einer individuellen Herstellung basieren die Abmessungen des Abformlöffels und/oder eine Wölbung auf Patientendaten. Diese Patientendaten umfassen beispielsweise Messwerte eines Gebisses und/oder von Patientenbilden, beispielsweise Röntgenaufnahmen.

Gemäß einer weiteren vorteilhaften Ausgestaltung eines Aspekts der Erfindung umfasst die Gitterstruktur mehrere Gitterelemente mit Gitterelementflächen zwischen 10 mm² und 50 mm², insbesondere zwischen 16 mm² und 36 mm², bevorzugt mit einer durchschnittlichen Gitterelementfläche von 25 mm².

Die Gitterelementflächen beziehen sich dabei insbesondere auf die Fläche der Zwischenräume der Gitterstruktur, die durch das Material der Gitterstruktur aufgespannt werden. Die Fläche eines solchen Zwischenraums, also eines Gitterelements, bzw. einer Masche, soll dabei zwischen 10 mm² und 50 mm², insbesondere zwischen 16 mm² und 36 mm² betragen. Verschiedene Gitterelemente, bzw. Zwischenräume können dabei auch verschiedene Größen innerhalb dieser Wertebereiche aufweisen. Bevorzugt beträgt eine durchschnittliche Gitterelementfläche aller Gitterelemente, bzw. Zwischenräume, der Gitterstruktur ungefähr 25 mm². Ungefähr bedeutet in diesem Zusammenhang, dass auch in dieser bevorzugten Variante Abweichungen von ± 10 % auftreten können.

Es wurde erkannt, dass eine Gitterstruktur mit Gitterelementen dieser Größen sich positiv auf die Stabilität, Durchlässigkeit bzw. Aufnahme von Abformmaterial und Effizienz der Herstellung des Abformlöffels auswirkt.

Gemäß einer weiteren vorteilhaften Ausgestaltung eines Aspekts der Erfindung umfasst die Gitterstruktur mehrere Netzstreben mit einer Netzstrebendicke und weist der Abformlöffel im Löffelabschnitt eine Abformlöffeldicke auf und beträgt das Verhältnis von Netzstrebendicke zu Abformlöffeldicke zwischen 0,25 und 0,5.

Die Netzstreben bestehen aus dem Material der Gitterstruktur und bilden dabei die Gitterelemente der Gitterstruktur indem sie einen Zwischenraum der Gitterstruktur einschließen. Insbesondere bilden die Netzstreben die Gitterstruktur. Die Bezeichnung Netzstreben impliziert nicht, dass diese zwingend gerade ausgestaltet sind. Es sind ebenso gekrümmte, geknickte oder anderweitige von einer geraden Ausgestaltung abweichende Ausgestaltungen der Netzstreben möglich. Die Bezeichnung mehrere Netzstreben impliziert ebenfalls nicht, dass diese in einem Herstellungsprozess zwingend zunächst einzeln vorliegen und dann zu der Gitterstruktur verbunden werden. Die Netzstreben können ebenso beispielsweise durch ein Formgussverfahren oder eine additive Herstellung direkt als Teil der Gitterstruktur hergestellt werden.

Die Netzstrebendicke bezeichnet bevorzugt eine Ausdehnung der Netzstreben senkrecht zu einer länglichen Ausdehnung der Netzstreben. Insbesondere weisen alle Netzstreben der Gitterstruktur eine gleiche Netzstrebendicke auf, beispielsweise an Verbindungspunkten mehrerer Netzstreben in der Gitterstruktur kann eine lokale Netzstrebendicke jedoch auch von dieser abweichen. Sollte die Gitterstruktur mehrere Netzstreben unterschiedlicher Dicke umfassen, bezieht sich die Netzstrebendicke auf eine durchschnittliche Netzstrebendicke.

Ebenso kann beispielsweise eine Dicke des Abformlöffels an gewissen Stellen des Löffelabschnitts zu- oder abnehmen. In diesem Fall bezieht sich die Abformlöffeldicke auf eine durchschnittliche Abformlöffeldicke des Löffelabschnitts. Insbesondere bezieht sich die Abformlöffeldicke nur auf eine Dicke der Teile des Löffelabschnitts, die die Gitterstruktur aufweisen.

Gemäß dieser Ausgestaltung beträgt die Abformlöffeldicke das Doppelte bis Vierfache der Netzstrebendicke. Es wurde erkannt, dass die Zwischenräume der Gitterstruktur in dieser Ausgestaltung derart vorteilhaft ausgestaltet sind, dass sie genug Volumen zur Aufnahme von Abformmaterial aufweisen und die Netzstrebendicke die Genauigkeit des Abdrucks nicht negativ beeinflusst.

Gemäß einer bevorzugten Variante der obigen Ausgestaltung beträgt die Netzstrebendicke etwa 1 mm und die Abformlöffeldicke im Querschnitt etwa 3 mm.

Die Bezeichnung Abformlöffeldicke im Querschnitt bringt zum Ausdruck, dass die Abformlöffeldicke in einem Querschnitt des Abformlöffels ermittelt wird. Insbesondere weist der Löffelabschnitt in dieser Ausgestaltung in den Teilen des Löffelabschnitts die die Gitterstruktur aufweisen eine konstante Abformlöffeldicke von etwa 3 mm auf.

Die Bezeichnung der Dickenwerte mit etwa bedeutet, dass kleinere Abweichungen von diesen exakten Werten im Rahmen des obigen Verhältnisses möglich sind.

In dieser besonders bevorzugten Variante ist der Abformlöffel und insbesondere der Teil des Löffelabschnitts der die Gitterstruktur aufweist stabil und handlich ausgestaltet. Die angegebenen Werte der Netzstrebendicke und der Abformlöffeldicke führen zu einem stabilen Abformlöffel, der dazu geeignet ist genaue Gebissabdrücke anzufertigen und der überdies durch seine geringen Abmessungen, zumindest in den Teilen des Löffelabschnitts der die Gitterstruktur aufweist, den Komfort des Patienten bei der Anfertigung des Abdrucks erhöht.

Gemäß einem zweiten Aspekt der Erfindung wird die Aufgabe durch ein Verfahren zur Herstellung eines Abformlöffels zur Anfertigung von Gebissabdrücken mithilfe von Abformmaterial gelöst, umfassend die folgenden Schritte: Konstruieren einer Form des Abformlöffels, insbesondere unter Ausführung eines Computerprogramms, Umwandeln der Form, zumindest abschnittsweise, in eine Gitterstruktur umfassend mehrere Gitterelemente, insbesondere unter Ausführung des Computerprogramms, Herstellen des Abformlöffels, insbesondere mit einem 3D-Druckverfahren.

Ein erfindungsgemäßes Verfahren ist insbesondere dazu ausgestaltet einen Abformlöffel gemäß dem ersten Aspekt der Erfindung herzustellen.

Neben den explizit aufgeführten Verfahrensschritten kann ein erfindungsgemäßes Verfahren auch weitere Schritte vor, zwischen oder nach den explizit aufgeführten Verfahrensschritten umfassen.

Der Schritt des Konstruierens einer Form des Abformlöffels erfolgt bevorzugt als digitaler Schritt unter Ausführung eines Computerprogramms auf einem Computer. In diesem Fall wird auf dem Computer eine digitale Form des Abformlöffels erzeugt. Diese ist insbesondere vergleichbar mit herkömmlichen Abformlöffeln und stellt sozusagen einen digitalen Rohling für einen erfindungsgemäßen Abformlöffel dar. Diese Form legt insbesondere die Abmessungen des erfindungsgemäßen Abformlöffels fest. In diesem Schritt ist es ferner insbesondere möglich die Form an ein spezifisches Gebiss anzupassen, beispielsweise unter Miteinbeziehung von Patientendaten, um mit dem Verfahren einen individuellen Abformlöffel zu erhalten.

Der Schritt des zumindest abschnittweisen Umwandelns der Form in eine Gitterstruktur umfassend mehrere Gitterelemente erfolgt bevorzugt als digitaler Schritt unter Ausführung eines Computerprogramms auf einem Computer. In diesen Abschnitten wird die Form durch mehrere digitale Netzelemente ersetzt. Bevorzugt wird hierbei die geometrische Form des Löffels nicht oder nur kaum verändert. Ferner bevorzugt handelt es sich bei den Netzelementen um Dreiecke, aus denen dann durch Kombination mehrerer Dreiecke eine hexagonale Gitterstruktur entsteht. Es hat sich herausgestellt, dass die Form des Abformlöffels durch dreieckige Netzelemente besonders gut nachbilden lässt, wodurch bei dem Umwandeln nur sehr geringe bis keine geometrischen Abweichungen von der ursprünglichen Form auftreten. Des Weiteren wurde festgestellt, dass hexagonale Gitterelemente sich sowohl auf die Stabilität, als auch die Durchlässigkeit der Gitterstruktur positiv auswirken.

In einer beispielhaften Ausführung umfasst dieser Schritt eine Optimierung der Stabilität und der Durchlässigkeit auf der Basis der Konstruktionsdatei und der Umwandlung in das Gitter im .stl Format durch eine FEM-Analyse (Finite-Elemente-Analyse). Das Format .stl ist aus dem Bereich des 3D-Drucks bekannt. Dieses stellt Netzkoordinaten dreidimensionaler Datenmodelle für additive Herstellungsverfahren bereit. Insbesondere beschreibt dies die ursprüngliche Konstruktionsdatei durch eine Approximation anhand einfacher geometrischer Formen, beispielsweise Drei- und Vierecken. Eine Approximation anhand einer Vielzahl von Dreieckselementen wird wie bereits erörtert vorliegend bevorzugt. Auf dieser Datei basierend wird dann das Gitter erstellt durch das Zusammenführen der Dreieckselemente zu hexagonalen Gitterelementen, bzw. vorzugsweise auch die Vernetzung durch eine hexagonale Struktur im Inneren. Bei letzterem handelt es sich um einen bevorzugten zusätzlichen Schritt zur Stabilisierung der Gitterstruktur, da durch das ursprüngliche Format nur die Außenfläche durch beispielsweise Drei- oder Vierecke dargestellt wird.

Der Schritt des Herstellens des Abformlöffels geschieht insbesondere mit einem 3D-Druckverfahren oder einem anderen additiven Herstellungsverfahren. Hierbei wird die konstruierte und zumindest abschnittsweise umgewandelte Form des Abformlöffels, die bevorzugt eine digitale Form ist, hergestellt. Der hergestellte Abformlöffel weist zumindest abschnittsweise die Gitterstruktur auf.

Umfasst ein erfindungsgemäßes Verfahren zusätzliche Schritte vor dem Schritt des Herstellens des Abformlöffels, die zu der Form des Abformlöffels zusätzliche Elemente hinzufügen, werde diese vorzugsweise ebenfalls in dem Schritt des Herstellens des Abformlöffels hergestellt.

Mit dem erfindungsgemäßen Verfahren ist es möglich eine Gitterstruktur in die Form eines Abformlöffels zu integrieren, ohne dass sich dies negativ auf die Stabilität des Abformlöffels und eine Qualität des mit dem Abformlöffel erstellten Gebissabdrucks auswirkt.

Gemäß einer vorteilhaften Ausgestaltung eines Aspekts der Erfindung umfasst der Schritt zur Umwandlung der Form die folgenden Schritte: Verteilen von Gitterelementen über die Form, zumindest abschnittsweise, insbesondere gleichmäßig, Anpassen der Verteilung insbesondere aufgrund von Krümmungen und/oder Kanten der Form.

Der Schritt des Verteilens der Gitterelemente über die Form erfolgt vorzugsweise in den Abschnitten, die in eine Gitterstruktur umgewandelt werden. Die Gitterelemente werden hierbei über die gesamten Abschnitte verteilt, sodass eine Verteilung der Gitterelemente über die Abschnitte, die in eine Gitterstruktur umgewandelt werden, entsteht. Dieser Schritt erfolgt insbesondere als digitaler Schritt unter Ausführung eines Computerprogramms an einem Computer. Insbesondere umfasst dieser Schritt in einer beispielhaften Ausführungsform das Verwenden von Netzelementen, aus denen durch Zusammenführen mehrerer Netzelemente die Gitterelemente entstehen.

Die dadurch in diesen Abschnitten entstehende Verteilung von Gitterelementen wird anschließend in einem weiteren Schritt aufgrund von Krümmungen und/oder Kanten der Form angepasst. Dieser Schritt beinhaltet insbesondere eine Optimierung der Verteilung derart, dass eine geometrische Form der konstruierten Form des Abformlöffels bei dem Schritt der Umwandlung möglichst geringfügig, bevorzugt nicht, verändert wird.

Insbesondere werden in diesem Schritt außerdem die Größen und/oder Formen der einzelnen Gitterelemente angepasst, sodass die ursprüngliche geometrische Form des Abformlöffels möglichst gut durch die Gitterelemente nachgebildet wird. Gerade Kanten und Krümmungen stellen dabei besonders herausfordernde Stellen dar, an denen die Verteilung der Gitterelemente durch eine entsprechende Anpassung optimiert werden kann.

Gemäß einer bevorzugten Variante der obigen Ausgestaltung umfasst das Verfahren ferner: Hinzufügen eines durchgehenden Randes an Kanten der Form.

Diese Ausgestaltung des Verfahrens betrifft besonders Ausgestaltungen des Abformlöffels, in denen ein Großteil oder der gesamte Löffelabschnitt in eine Gitterstruktur umgewandelt wird.

Der zusätzliche Rand an Kanten der Form des Abformlöffels wird insbesondere nicht in eine Gitterstruktur umgewandelt und wirkt sich positiv auf die Stabilität des Abformlöffels aus.

Insbesondere ist dieser Rand rund und glatt ausgestaltet, was den Komfort im Umgang mit dem Abformlöffel erhöht.

Der Schritt des Hinzufügens eines durchgehenden Randes an Kanten der Form erfolgt vorzugsweise nach dem Schritt des Konstruierens der Form und nach dem Schritt des zumindest abschnittweisen Umwandelns der Form. Alternativ erfolgt der Schritt insbesondere nach dem Schritt des Konstruierens der Form und vor dem Schritt des zumindest abschnittweisen Umwandelns der Form.

Vorzugsweise erfolgt der Schritt des Hinzufügens eines durchgehenden Randes an Kanten der Form als digitaler Schritt unter Ausführung eines Computerprogramms an einem Computer vor dem Herstellen des Abformlöffels. Alternativ kann dieser Schritt jedoch auch nach dem Herstellen des Abformlöffels durch einen zusätzlichen Herstellungsschritt erfolgen.

Gemäß einer weiteren vorteilhaften Ausgestaltung eines Aspekts der Erfindung umfasst das Verfahren ferner: Hinzufügen zusätzlicher Gitterelemente zur zusätzlichen Verbindung der Gitterstruktur, insbesondere in ein Volumen der Form zur Verbindung einer Oberseite der Form mit einer Unterseite der Form.

Diese Ausgestaltung des Verfahrens betrifft besonders Ausgestaltungen eines erfindungsgemäßen Abformlöffels, in denen der gesamte Löffelabschnitt eine Gitterstruktur aufweist und hohl ausgestaltet ist. Zur zusätzlichen Stabilisierung des Abformlöffels sieht der zusätzliche Schritt dieser Ausgestaltung ein Hinzufügen zusätzlicher Gitterelemente zur zusätzlichen Verbindung der Gitterstruktur, insbesondere in ein Volumen der Form zur Verbindung einer Oberseite der Form mit einer Unterseite der Form vor.

Das Volumen der Form bezieht sich vorzugsweise bei einer hohlen Ausgestaltung des Löffelabschnitts auf ein von der Oberfläche des Löffelabschnitts eingeschlossenes Volumen. Bei einer solchen hohlen Ausgestaltung des Löffelabschnitts bestehen zunächst nur an den Rändern des Abformlöffels Verbindungen zwischen Ober- und Unterseite der Form des Abformlöffels. Durch den obigen Schritt werden insbesondere in dieses eingeschlossene Volumen zusätzliche Verbindungen der Gitterstruktur hinzugefügt.

Dieser Schritt erfolgt vorzugsweise als digitaler Schritt unter Ausführung eines Computerprogramms auf einem Computer nach dem Schritt des Umwandelns und vor dem Schritt des Herstellens des Abformlöffels. Insbesondere orientiert sich dieser Schritt dabei an Netzelementen aus dem Schritt des Umwandelns.

Alternativ ist es ebenfalls denkbar diesen Schritt nach dem Schritt des Herstellens des Abformlöffels als zusätzlichen Herstellungsschritt durchzuführen.

Gemäß einem weiteren Aspekt der Erfindung wird die Aufgabe durch ein nichtflüchtiges Speichermedium gelöst, auf dem eine nach Schritten eines erfindungsgemäßen Verfahrens unter Ausführung eines Computerprogramms erstellte Gitterstruktur eines Abformlöffels zur Anfertigung von Gebissabdrücken mithilfe von Abformmaterial gespeichert ist.

Insbesondere umfasst das nichtflüchtige Speichermedium eine digitale Form eines erfindungsgemäßen Abformlöffels umfassend eine Gitterstruktur. Vorzugsweise wurde diese Form mit einem Schritt aus einem erfindungsgemäßen Verfahren konstruiert und zumindest abschnittweise in eine Gitterstruktur umgewandelt. Es ist jedoch auch denkbar, dass diese Form eine Zwischenstufe eines dieser Schritte darstellt, beispielsweise einen Zustand der Form nach einer Netzumwandlung, bevor die Netzelemente zu Gitterelementen kombiniert werden.

Mit diesem nichtflüchtigen Speichermedium ist es vorzugsweise möglich einen erfindungsgemäßen Abformlöffel mit einem geeigneten Herstellungsgerät, beispielsweise einem 3D-Drucker, herzustellen. Hierbei liefert das nichtflüchtige Speichermedium vorzugsweise die Informationen, die das Herstellungsgerät benötigt, um einen erfindungsgemäßen Abformlöffel herzustellen. Es ist ebenfalls möglich, dass hierbei ein Computer zwischen dem nichtflüchtigen Speichermedium und dem Herstellungsgerät zwischengeschaltet ist, um Informationen und Daten von dem nichtflüchtigen Speichermedium an das Herstellungsgerät und/oder umgekehrt zu übertragen.

Merkmale vorteilhafter Ausführungsformen der Erfindung sind insbesondere in den Unteransprüchen definiert, wobei weitere vorteilhafte Merkmale, Ausführungen und Ausgestaltungen für den Fachmann zudem aus der obigen Erläuterung und der folgenden Diskussion zu entnehmen sind.

Im Folgenden wird die vorliegende Erfindung anhand von in den Figuren dargestellten Ausführungsbeispielen weiter illustriert und erläutert. Hierbei zeigt
- Fig. 1: eine schematische Darstellung zur Illustration eines ersten Ausführungsbeispiels eines erfindungsgemäßen Abformlöffels,
- Fig. 2: eine schematische Darstellung zur Illustration eines zweiten Ausführungsbeispiels eines erfindungsgemäßen Abformlöffels,
- Fig. 3: eine weitere schematische Darstellung zur Illustration des zweiten Ausführungsbeispiels eines erfindungsgemäßen Abformlöffels,
- Fig. 4: eine schematische Darstellung zur Illustration eines dritten Ausführungsbeispiels eines erfindungsgemäßen Abformlöffels,
- Fig. 5: eine weitere schematische Darstellung zur Illustration des dritten Ausführungsbeispiels eines erfindungsgemäßen Abformlöffels,
- Fig. 6: eine schematische Darstellung zur Illustration der Schritte eines ersten Ausführungsbeispiels eines erfindungsgemäßen Verfahrens,
- Fig. 7: ein schematisches Ablaufdiagramm eines Ausführungsbeispiels des erfindungsgemäßen Verfahrens.

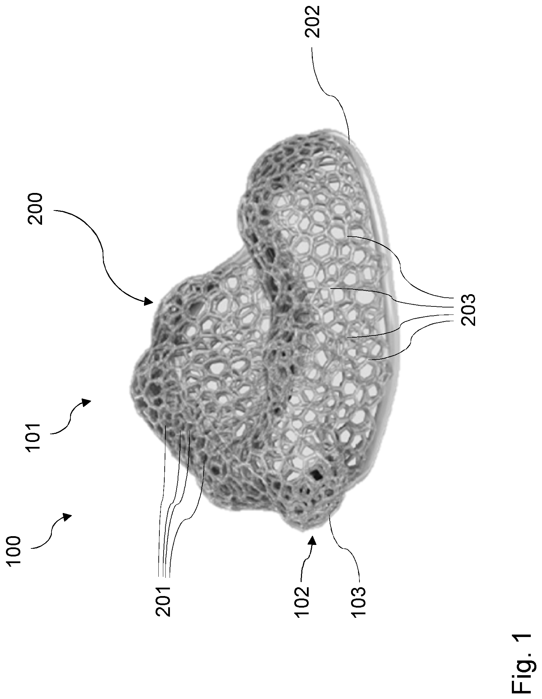

Figur 1 zeigt eine schematische Darstellung zur Illustration eines ersten Ausführungsbeispiels erfindungsgemäßen Abformlöffels 100. Der Abformlöffel 100 weist einen Löffelabschnitt 101 und einen Halteabschnitt 102 mit Griff 103 auf. Der komplette Löffelabschnitt 101 sowie auch der Halteabschnitt 102 weisen dabei eine Gitterstruktur 200 auf, die verschiedene Gitterelemente 201 umfasst, unter anderem in Form von Hexagons und Pentagons verschiedener Größen. Die Gitterstruktur 200 umfasst eine Vielzahl von Netzstreben 203 mit einer konstanten Netzstrebendicke. Die Netzstreben 203 spannen die Gitterstruktur 200 auf und bilden die Gitterelemente 201. Des Weiteren weist der Löffelabschnitt 101 einen durchgehenden Rand 202 an einer den Löffelabschnitt 101 umlaufenden Kante auf. Dieser Rand 202 ist rund und glatt ausgestaltet. Der Löffelabschnitt 101 ist ferner hohl ausgestaltet. Die Wölbung des Löffelabschnitts 101 ermöglicht eine Aufnahme von Abformmaterial, das während der Abnahme des Gebissabdrucks durch die Zwischenräume der Gitterstruktur 200 in den hohl ausgestalteten Löffelabschnitt 101 dringen kann. Das erste Ausführungsbeispiel zeigt einen bezüglich eines spezifischen Gebisses individuell angefertigten Abformlöffel 100.

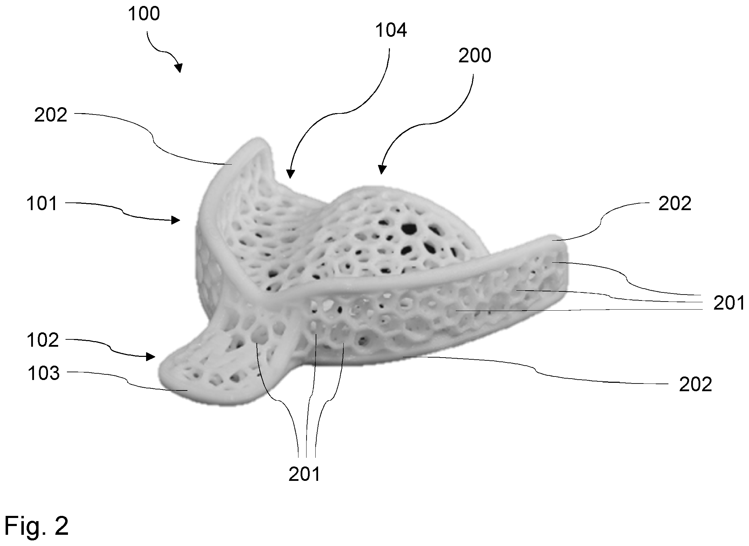

Figur 2 zeigt eine schematische Darstellung zur Illustration eines zweiten Ausführungsbeispiels eines erfindungsgemäßen Abformlöffels 100 in einer Seitenansicht. Dieses zweite Ausführungsbeispiel weist sämtliche Elemente des ersten Ausführungsbeispiels aus Figur 1 auf. Zur Wahrung der Übersichtlichkeit wurde in Figur 2 sowie den folgenden Figuren auf eine explizite Kennzeichnung der Netzstreben 203 verzichtet. Diese sowie die weiteren Ausführungsbeispiele weisen jedoch analog zu dem ersten Ausführungsbeispiel eine Vielzahl von Netzstreben mit gleicher Netzstrebendicke auf, die die Gitterstruktur 200 aufspannen und die Gitterelemente 201 bilden. In dieser Ansicht in Figur 2 ist ein Bereich des Abformlöffels 100 dargestellt, der als Aufnahme 104 für Abformmaterial bei Verwendung des Abformlöffels 100 ausgestaltet ist. Üblicherweise wird das Abformmaterial in diesem Bereich 104 auf den Abformlöffel 100 aufgetragen. Im Vergleich zu dem ersten Ausführungsbeispiel ist der Griff 103 in diesem Ausführungsbeispiel ausgeprägter, was eine bessere Handhabung des Abformlöffels 100 ermöglicht. Eine Größenangabe hinsichtlich der Größe des Abformlöffels ist in den Halteabschnitt 102, genauer den Griff 103 eingearbeitet. Das zweite Ausführungsbeispiel zeigt einen konfektioniert angefertigten Abformlöffel einer Standardgröße "M".

Der Abformlöffel 100 ist in diesem Ausführungsbeispiel für einen Oberkiefer ausgestaltet. Bevorzugt weist der Abformlöffel 100 in Ausführungen zum Abdruck eines Oberkiefers eine leichte Erhebung 204, bzw. leichte Wölbung, im Löffelabschnitt 101 auf, sodass bei eingesetztem Abformlöffel vorzugsweise ein möglichst geringer Abstand des Abformlöffels zum Munddach, auch harter Gaumen genannt, des Patienten vorliegt. Dies begünstigt den Halt des Abformlöffels im Mundraum des Patienten sowie die Genauigkeit des Abdrucks, da die leichte Erhebung 204 einen zusätzlichen Widerstand für das Abformmaterial darstellt, dass so besser an die Innenseiten der Zähne des Oberkiefers gedrückt wird.

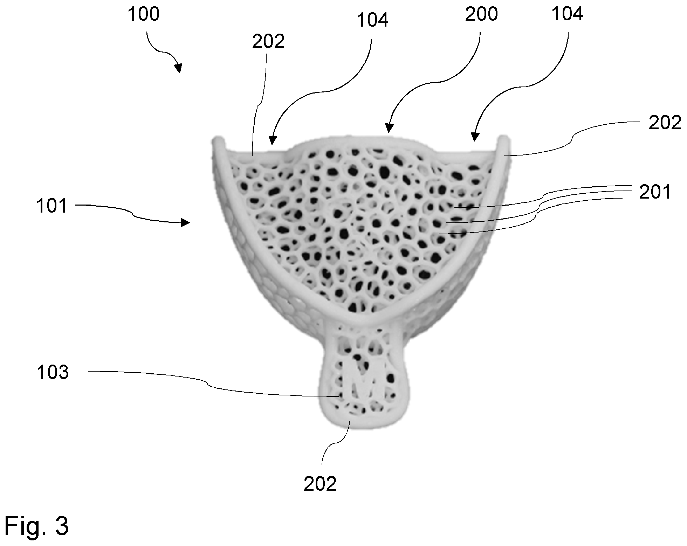

Figur 3 zeigt eine weitere schematische Darstellung zur Illustration des zweiten Ausführungsbeispiels eines erfindungsgemäßen Abformlöffels 100 in einer Draufsicht.

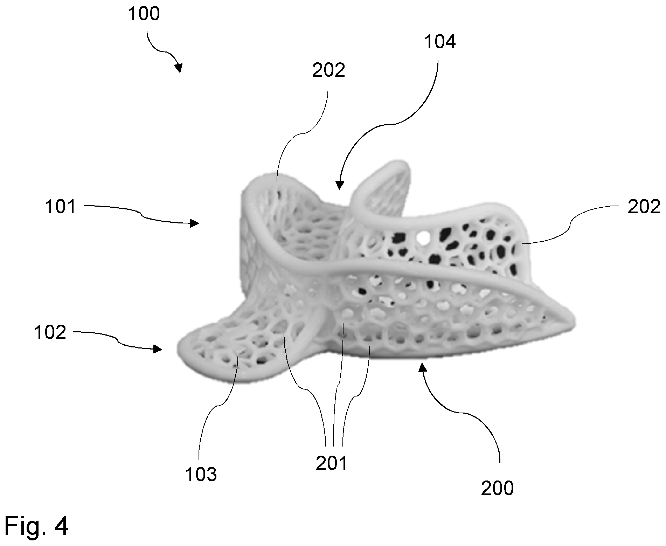

Figur 4 zeigt eine schematische Darstellung zur Illustration eines dritten Ausführungsbeispiels eines erfindungsgemäßen Abformlöffels 100 in einer Seitenansicht. Der Abformlöffel 100 weist in diesem dritten Ausführungsbeispiel ebenfalls sämtliche Merkmale des Abformlöffels 100 gemäß dem ersten Ausführungsbeispiel auf. Analog zum zweiten Ausführungsbeispiel ist auch in Figur 4 ein Bereich des Abformlöffels 100 dargestellt, der als Aufnahme 104 für Abformmaterial bei Verwendung des Abformlöffels 100 ausgestaltet ist. Üblicherweise wird das Abformmaterial in diesem Bereich 104 auf den Abformlöffel 100 aufgetragen. Ebenfalls ist eine Größenangabe hinsichtlich der Größe des Abformlöffels ist in den Halteabschnitt 102, genauer den Griff 103 eingearbeitet. Das dritte Ausführungsbeispiel zeigt einen konfektioniert angefertigten Abformlöffel einer Standardgröße "L".

Der Abformlöffel 100 ist in diesem Ausführungsbeispiel für einen Unterkiefer ausgestaltet. Bevorzugt weist der Abformlöffel 100 in Ausführungen zum Abdruck eines Unterkiefers eine steile Kante 205 im Löffelabschnitt 101 auf, sodass bei eingesetztem Abformlöffel die steile Kante 205 ein Eindringen des Abformmaterials in den Mundboden verhindert, bzw. dem entgegenwirkt. Die steile Kante 205 begünstigt den Halt des Abformlöffels im Mundraum des Patienten sowie die Genauigkeit des Abdrucks, da die steile Kante 205 einen zusätzlichen Widerstand für das Abformmaterial darstellt, dass so besser an die Innenseiten der Zähne des Unterkiefers gedrückt wird.

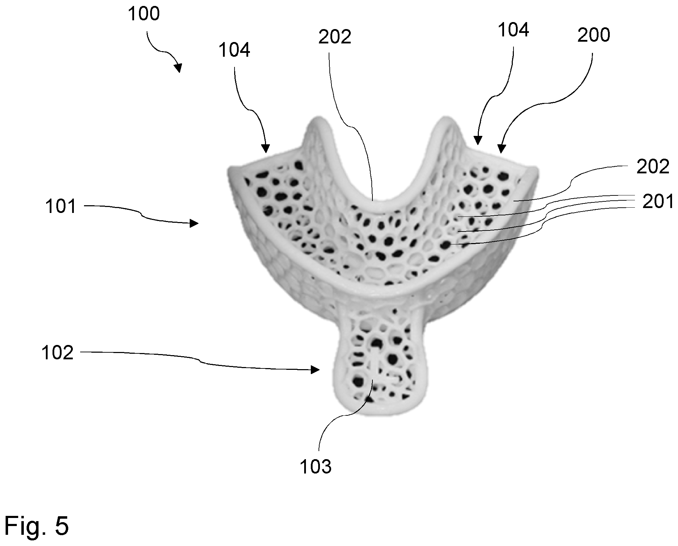

Figur 5 zeigt eine weitere schematische Darstellung zur Illustration des dritten Ausführungsbeispiels eines erfindungsgemäßen Abformlöffels 100 in einer Draufsicht.

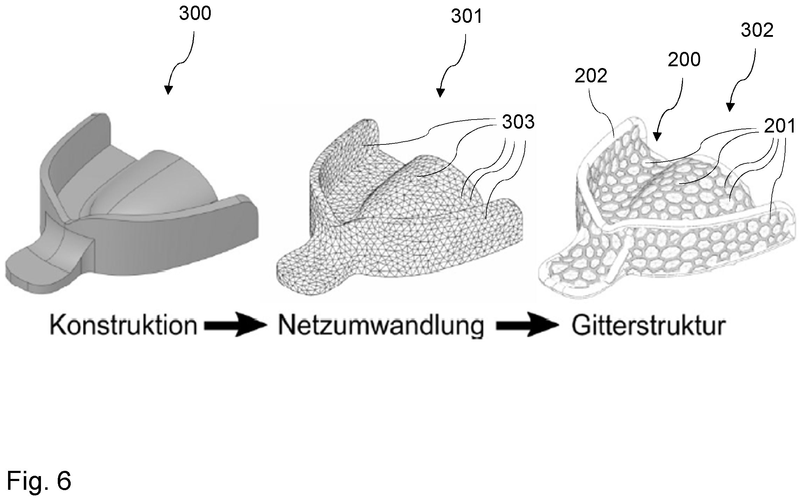

Figur 6 zeigt eine schematische Darstellung zur Illustration der Schritte eines ersten Ausführungsbeispiels eines erfindungsgemäßen Verfahrens. Abgebildet sind beispielhafte Zustände des Abformlöffels bei Schritten eines erfindungsgemäßen Verfahrens. Insbesondere handelt es sich hierbei um digitale Schritte und demnach digitale Abbildungen des Abformlöffels. Zunächst ist eine Form 300 des Abformlöffels gezeigt, die Ergebnis eines erfindungsgemäßen Schrittes des Konstruierens ist. Hier werden die Abmessungen sowie die Geometrie des Abformlöffels festgelegt. Vorzugsweise kommt es in den weiteren Schritten zu keinen oder lediglich minimalen Abweichungen von diesen Abmessungen bzw. dieser Geometrie. Als nächstes ist eine Verteilung 301 von Netzelementen über die Form des Abformlöffels gezeigt. Dies ist insbesondere Ergebnis eines Schritts des Verteilens von Netzelementen 303 über die Form und bevorzugt auch Anpassen der Verteilung der Netzelemente 303. Die Netzelemente 303 sind derart über die Form verteilt, dass die Abmessungen und Geometrie der Form durch die Netzelemente 303 möglichst genau nachgestellt werden. Diese Netzumwandlung bildet in diesem Beispiel die Grundlage für die Gitterstruktur 200, da aus der Kombination mehrerer Netzelemente 303 die Gitterelemente 201 der Gitterstruktur 200 entstehen. Zuletzt zeigt Figur 6 einen Zustand des Abformlöffels nach dem Schritt des Umwandelns der Form in eine Gitterstruktur 200 sowie des Hinzufügens eines durchgehenden Randes 202. Hierbei kann es sich immer noch um eine digitale Abbildung des Abformlöffels handeln oder alternativ bereits um einen mit einem erfindungsgemäßen Schritt des Herstellens hergestellten Abformlöffel. Die Figur 6 verdeutlicht somit die Auswirkungen der Schritte eines erfindungsgemäßen Verfahrens auf einen Abformlöffel bzw. dessen Form zur Bereitstellung oder Herstellung eines erfindungsgemäßen Abformlöffels.

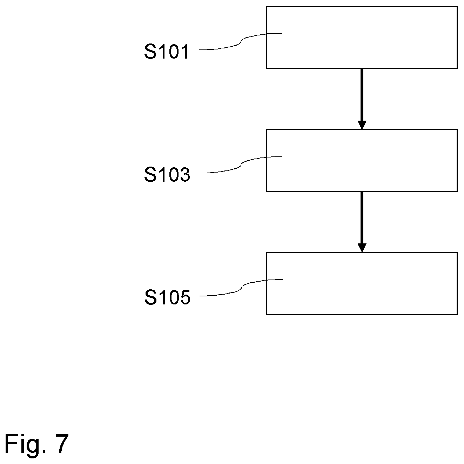

Figur 7 zeigt ein schematisches Ablaufdiagramm eines Ausführungsbeispiels des erfindungsgemäßen Verfahrens zur Herstellung eines Abformlöffels zur Anfertigung von Gebissabdrücken mithilfe von Abformmaterial. Der Schritt S101 umfasst dabei das Konstruieren einer Form des Abformlöffels, insbesondere unter Ausführung eines Computerprogramms. Der Schritt S103 umfasst ein Umwandeln der Form des Abformlöffels, zumindest abschnittsweise, in eine Gitterstruktur umfassend mehrere Gitterelemente, insbesondere unter Ausführung eines Computerprogramms. Der Schritt S105 umfasst das Herstellen des Abformlöffels, insbesondere mit einem 3D-Durckverfahren. In weiteren Ausführungsbeispielen kann das Verfahren noch weitere Schritte vor, zwischen oder nach den Schritten aus Figur 7 umfassen, beispielsweise ein Hinzufügen eines durchgehenden Randes an Kanten der Form oder ein Hinzufügen zusätzlicher Gitterelemente zur zusätzlichen Verbindung der Gitterstruktur, insbesondere in ein Volumen der Form zur Verbindung einer Oberseite der Form mit einer Unterseite der Form.

### Bezugszeichen:

- 100: Abformlöffel
- 101: Löffelabschnitt
- 102: Halteabschnitt
- 103: Griff
- 104: Aufnahme für Abformmaterial
- 200: Gitterstruktur
- 201: Gitterelement
- 202: Rand
- 203: Netzstrebe
- 204: Leichte Erhebung
- 205: Steile Kante
- 300: Form des Abformlöffels
- 301: Verteilung von Netzelementen über die Form
- 302: Umgewandelte Form des Abformlöffels
- 303: Netzelement

## Patentansprüche

1. Abformlöffel zur Anfertigung von Gebissabdrücken mithilfe von Abformmaterial umfassend:
einen Löffelabschnitt, ausgestaltet zur Aufnahme des Abformmaterials, und
einen Halteabschnitt, umfassend einen Haltegriff,
wobei der Löffelabschnitt ferner zur Aufnahme eines Gebisses eines Ober- oder Unterkiefers ausgestaltet ist,
**dadurch gekennzeichnet, dass** eine Oberfläche des Abformlöffels zumindest in Teilen des Löffelabschnitts eine Gitterstruktur aufweist, die zur Aufnahme des Abformmaterials ausgestaltet ist und die gesamte Oberfläche des Abformlöffels im Löffelabschnitt die Gitterstruktur aufweist und der Abformlöffel im Löffelabschnitt hohl ausgestaltet ist, derart, dass Abformmaterial, das durch die Gitterstruktur dringt, in den Abformlöffel aufgenommen wird.

2. Abformlöffel nach Anspruch 1, wobei die Gitterstruktur Ergebnis einer additiven Herstellung ist.

3. Abformlöffel nach einem der vorstehenden Ansprüche, umfassend einen insbesondere durchlaufenden Rand an Kanten des Abformlöffels, wobei der Rand keine Gitterstruktur aufweist.

4. Abformlöffel nach einem der vorstehenden Ansprüche, wobei der Abformlöffel die Anforderungen der Zulassung medizintechnischer Produkte, insbesondere im Bereich der Zahnmedizin, in Deutschland erfüllt.

5. Abformlöffel nach einem der vorstehenden Ansprüche, wobei die Gitterstruktur mindestens zwei unterschiedliche Gitterelemente umfasst, insbesondere Hexagon und Pentagon.

6. Abformlöffel nach einem der vorstehenden Ansprüche, wobei die Gitterstruktur, insbesondere der Löffelabschnitt, bevorzugt der Abformlöffel, aus einem 3D-druckbaren Material besteht.

7. Abformlöffel nach einem der vorstehenden Ansprüche, wobei der Abformlöffel konfektioniert und insbesondere individuell herstellbar ist.

8. Abformlöffel nach einem der vorstehenden Ansprüche, wobei die Gitterstruktur mehrere Gitterelemente mit Gitterelementflächen zwischen 10 mm² und 50 mm², insbesondere zwischen 16 mm² und 36 mm², bevorzugt mit einer durchschnittlichen Gitterelementfläche von 25 mm², umfasst.

9. Abformlöffel nach einem der vorstehenden Ansprüche, wobei die Gitterstruktur mehrere Netzstreben mit einer Netzstrebendicke umfasst und der Abformlöffel im Löffelabschnitt eine Abformlöffeldicke aufweist und das Verhältnis von Netzstrebendicke zu Abformlöffeldicke zwischen 0,25 und 0,5 beträgt.

10. Abformlöffel nach Anspruch 9, wobei die Netzstrebendicke etwa 1 mm und die Abformlöffeldicke im Querschnitt etwa 3 mm beträgt.

11. Verfahren zur Herstellung eines Abformlöffels zur Anfertigung von Gebissabdrücken mithilfe von Abformmaterial, umfassend die folgenden Schritte:
Konstruieren einer Form des Abformlöffels, insbesondere unter Ausführung eines Computerprogramms,
Umwandeln der Form, zumindest abschnittsweise, in eine Gitterstruktur umfassend mehrere Gitterelemente, insbesondere unter Ausführung des Computerprogramms,
Herstellen des Abformlöffels, insbesondere mit einem 3D-Druckverfahren,
wobei in dem Schritt des Umwandelns der Form die Form des Abformlöffels in einem gesamten Löffelabschnitt des Abformlöffels, der zur Aufnahme des Abformmaterials ausgestaltet ist, in eine Gitterstruktur umgewandelt wird.

12. Verfahren nach Anspruch 11, wobei der Schritt zur Umwandlung der Form die folgenden Schritte umfasst:
Verteilen der Gitterelemente über die Form, zumindest abschnittsweise, insbesondere gleichmäßig,
Anpassen der Verteilung insbesondere aufgrund von Krümmungen und/oder Kanten der Form.

13. Verfahren nach Anspruch 12, ferner umfassend:
Hinzufügen eines durchgehenden Randes an Kanten der Form.

14. Verfahren nach einem der Ansprüche 11 bis 13, ferner umfassend:
Hinzufügen zusätzlicher Gitterelemente zur zusätzlichen Verbindung der Gitterstruktur, insbesondere in ein Volumen der Form zur Verbindung einer Oberseite der Form mit einer Unterseite der Form.

15. Nichtflüchtiges Speichermedium, auf dem eine nach Schritten eines Verfahrens gemäß einem der Ansprüche 11 bis 14 unter Ausführung eines Computerprogramms erstellte Gitterstruktur eines Abformlöffels zur Anfertigung von Gebissabdrücken mithilfe von Abformmaterial gespeichert ist.
